# EUROPEAN PATENT SPECIFICATION

(11) **EP 1 514 701 B1**
(45) Date of publication and mention of the grant of the patent: **26.11.2008**
(21) Application number: 03730775.8
(22) Date of filing: 02.06.2003
(51) Int. Cl.: B60C 1/00, B60C 9/20, B29D 30/30, C08K 5/46, C08K 5/00

(54) **PROCESS FOR PRODUCING PNEUMATIC TIRE**
VERFAHREN ZUR HERSTELLUNG VON LUFTREIFEN
PROCEDE DE PRODUCTION DE PNEUMATIQUE

(30) Priority: 05.06.2002 JP 2002163904
(43) Date of publication of application: 16.03.2005
(73) Proprietor: Bridgestone Corporation, Tokyo 104-8340 (JP)
(72) Inventor: UCHINO, Osamu, c/o BRIDGESTONE CORPORATION, Kodaira-shi, Tokyo 187-8531 (JP)
(74) Representative: Whalley, Kevin
(86) International application number: PCT/JP2003/006939
(87) International publication number: WO 2003/103988

(56) References cited:
- EP-A- 1 205 315
- EP-A1- 0 675 161
- EP-A1- 0 900 820
- EP-A1- 1 083 199
- EP-A1- 1 174 236
- US-A- 4 935 297
- US-A- 5 368 082

## Description

This invention relates to a method of producing a pneumatic tire, and more particularly to a method of producing a pneumatic tire comprising a belt layer(s) made from a rubber composition which has good extrusion workability at an uncured state and high durability after vulcanization.

In the production of a composite body having various kinds of rubber, it is generally required to take a step of affixing various uncured rubber members prior to vulcanization. When the composite body is a pneumatic tire (hereinafter referred to a tire), such a tire comprises reinforcing members such as organic fibers or steel cords and various rubber members. Therefore, it is required to provide an uncured tire by affixing an uncured rubber member and a reinforcing member such as cords or the like at a shaping step prior to the vulcanization of the tire.

Nowadays, more sophisticated and diverse performances are required for the composite rubber bodies inclusive of tires. For this end, it is necessary to make the shaping step complicated, and manual labor is still required in the present circumstances. However, when the manual labor is carried out in the shaping step, significant improvement of the shaping efficiency can not be attained and also there is a problem that the affixing accuracy of various materials lowers. In case of a tire, the lamination accuracy particularly exerts an influence on the quality of the tire, so that it is strongly desired to improve the affixing accuracy in addition to the improvement of the shaping efficiency.

In order to fulfill these requests, JP-B-7-94155 proposes a method and an apparatus in which an outlet orifice of a constant-volume extruder is located in the vicinity of a position of a rotating support to be arranged with a rubber member and a rubber composition is directly extruded on the support. Also, JP-A-2000-79643 proposes a method and an apparatus in which a plurality of uncured rubber compositions are directly extruded on a support while mixing in a single extruding apparatus.

In the tire, a belt layer arranged between a tread portion and a carcass plays a role for improving the steering stability and the durability, so that a coating rubber for the belt layer is required to have high modulus of elasticity and durability for playing the above role. For this end, a rubber composition constituting the conventional coating rubber contains great amounts of a filler and a crosslinking agent, but a softening agent or the like is not used in this rubber composition because it lowers the modulus of elasticity. Therefore, the rubber composition used in the conventional coating rubber has considerably poor workability at an uncured state.

Attention is also drawn to the disclosures of EP-A-1174236, EP-A-1205315, EP-A-0900820, and EP-A-0675161.

Although the rubber composition used in the conventional coating rubber has poor workability at the uncured state as mentioned above, since the belt layer is previously provided as a band-shaped member having a given width at a rolling step, the poor workability of this rubber composition at the uncured state is inappropriate in the conventional tire shaping method. In the shaping method for directly extruding the above band-shaped uncured rubber composition for the main purpose of improving the affixing accuracy (so-called core shaping), however, the rubber composition is extruded as a coating rubber just before the shaping, so that there is a drawback that the rubber composition of the conventional compounding system is extruded at only a slow rate so as not to cause scorching.

On the contrary, if it is intended to improve the workability (extrusion operability) in the conventional compounding technique, a softening agent and a processing aid are used. In this case, however, the modulus of elasticity lowers or the durability is deteriorated after the vulcanization, and hence the desired property is not obtained.

It is, therefore, an object of the invention to solve the aforementioned problems and to provide a method of producing a pneumatic tire comprising a belt layer(s) made from a rubber composition having good extrusion workability at a uncured state and high durability after the vulcanization.

The inventor has made various studies in order to solve the above problems and found that when a rubber composition obtained by compounding a rubber component with a compound having a specified melting point and/or a resin having a specified softening point and limiting a total compounding amount of the above compound and the resin to a specified range is used in a coating rubber for a belt layer, since the extrusion workability of the rubber composition at the uncured state is high, the rubber composition can be extruded as a coating rubber at a faster extruding rate without scorching, and also since the durability of the rubber composition after the vulcanization is high, a tire having a higher durability can be produced, and as a result the invention has been accomplished.

That is, the method of producing a pneumatic tire according to the invention is a method of producing a pneumatic tire comprising a belt comprised of at least two belt layers each constituted with steel cords and a coating rubber covering the cord between a tread and a radial carcass by spirally winding a band-shaped uncured rubber composition extruded through an extruder on a rotating support to form a rubber member having a given sectional shape (so-called core shaping), wherein the formation of the belt layer is carried out by ① successively laminating the coating rubber and the steel cords, or ② affixing a small-width band-shaped body of single or plural steel cords previously covered with the coating rubber, or ③ forming a small-width band-shaped body by covering a single or plural steel cords with the coating rubber during the shaping and affixing it, and a rubber composition constituting the coating rubber is formed by compounding a rubber component with a compound having a melting point of 120-220°C and/or a resin having a softening point prior to curing of 90-150°C, and a total compounding amount of the compound and the resin is 0.5-25 parts by mass based on 100 parts by mass of the rubber component.

In the invention, the rubber composition has a viscosity of not more than 2 kPa·s as measured at a shearing rate of 750 s⁻¹ and a temperature of 100°C according to ASTM D5099-93, and a tensile stress at 100% elongation of not less than 5 MPa and an elongation at break of not less than 200% as rubber properties after the vulcanization.

In a preferable embodiment of the invention, the resin is a thermosetting resin, more preferably at least one kind of bismaleimide-based resin. On the other hand, the compound may be at least one bismaleimide.

In another preferable embodiment of the invention, the rubber composition further contains 0.5-2.0 parts by mass of N,N'-dicyclohexyl-2-benzothiazolyl sulfenamide based on 100 parts by mass of the rubber component.

In a further preferable embodiment of the invention, the rubber composition further contains 0.02-0.4 part by mass of a cobalt compound as a total content of a cobalt element based on 100 parts by mass of the rubber component.

In a still further preferable embodiment of the invention, the rubber composition contains 4.0-8.0 parts by mass of sulfur as a vulcanizing agent based on 100 parts by mass of the rubber component.

The invention will be described in detail below. In the method of producing the pneumatic tire according to the invention, the band-shaped uncured rubber composition extruded through an extruder is directly and spirally wound on the rotating support provided with a radial carcass member to form a rubber member having a given sectional shape, whereby there is shaped an uncured tire corresponding to a tire comprising a belt comprised of at least two belt layers each constituted with steel cords and a coating rubber covering the cords between a tread and a radial carcass. In the production method of the invention, the belt is disposed between the tread and the radial carcass by a so-called core shaping, so that the manual labor in the shaping step of the uncured tire is largely reduced and the affixing accuracy is improved.

The formation of the belt layer is carried out by ① successively laminating the coating rubber and the steel cords, or ② affixing a small-width band-shaped body of single or plural steel cords previously covered with the coating rubber or ③ forming a small-width band-shaped body by covering a single or plural steel cords with the coating rubber during the shaping and affixing it. In these belt forming methods ①, ② and ③, a small-size apparatus is used instead of a large-size warming-rolling apparatus used in the conventional belt forming method, and hence it is required to use a rubber composition having a good workability.

According to this requirement, in the production method of the invention, the rubber composition obtained by compounding the rubber component with a compound having a melting point of 120-220°C and/or a resin having a softening point prior to curing of 90-150°C and wherein a total compounding amount of the compound and the resin is 0.5-25 parts by mass based on 100 parts by mass of the rubber component is applied to the coating rubber. In the rubber composition is compounded the compound having a specified melting point and/or the resin having the specified softening point, so that the modulus of elasticity and durability after the vulcanization are sufficiently high. In the rubber composition, therefore, a filling amount of carbon black is not required to be high as in the conventional technique, and the filling amount of carbon black is decreased to improve the fluidity, whereby the extrusion workability at the uncured state can be improved. As a result, when this rubber composition is adopted in the coating rubber, scorching is hardly caused even during extrusion at a faster rate; and also a tire having a higher durability is obtained because the modulus of elasticity of the belt layer after the vulcanization is high.

The rubber component used in the rubber composition constituting the coating rubber according to the invention is preferably a diene rubber. As the diene rubber are mentioned natural rubber, isoprene rubber, butadiene rubber, styrene-butadiene rubber, butyl rubber and the like. These rubber components are used alone or in a blend of two or more. Moreover, natural rubber having a high fracture strength is preferably used from a viewpoint of enhancing the durability of the belt.

The rubber composition constituting the coating rubber is obtained by compounding the rubber component with the compound having the melting point of the above range (120-220°C) and/or the resin having the softening point of the above range (90-150°C) in the total compounding amount of the above range (0.5-25 parts by mass). When the melting point of the compound is lower than 120°C or the softening point prior to curing of the resin is lower than 90°C, sufficient modulus of elasticity after the vulcanization is not obtained, while when the melting point of the compound exceeds 220°C or the softening point prior to curing of the resin exceeds 150°C, the extrusion workability at the uncured state is not improved. Also, when the total compounding amount of the compound and the resin is less than 0.5 part by mass, sufficient modulus of elasticity after the vulcanization is not obtained, while when it exceeds 25 parts by mass, the fracture strength lowers. Therefore, when using the rubber composition obtained by compounding the rubber component with the compound having the melting point of the above range and/or the resin having the softening point of the above range in the total compounding amount of the above range, it can be extruded at a faster rate without scorching to improve the extrusion workability at the uncured state, and the modulus of elasticity and the durability after the vulcanization can be enhanced sufficiently.

The resin according to the invention is preferably a thermosetting resin from a viewpoint of the stability after the vulcanization. Moreover, the thermosetting resin is not cured during the extrusion. In the invention, a thermosetting resin after the curing may be also used as the thermosetting resin. Particularly, the resin according to the invention preferably contains at least one kind of a bismaleimide based resin such that the modulus of elasticity after the vulcanization is ensured. As the bismaleimide based resin are mentioned bismaleimide resin, phenyl bismaleimide resin and the like.

The compound having a melting point of the above range according to the invention is preferably bismaleimide. As the bismaleimide are mentioned N,N'-1,2-phenylene bismaleimide, N,N'-1,3-phenylene bismaleimide, N,N'-1,4-phenylene bismaleimide, N,N'-(4,4'-diphenylmethane)bismaleimide, 2,2-bis[4-(4-maleimidephenoxy)phenyl]propane, bis(3-ethyl-5-methyl-4-maleimidephenyl)methane and the like. Among them, N.N'-(4,4'-diphenylmethane)bismaleimide is particularly preferable.

In these compounds and resins, as the melting point of the compound or the softening point of the resin becomes lower, the effect of improving the workability is large, while as the melting point of the compound or the softening point of the resin becomes higher, the effect of improving the modulus of elasticity after the vulcanization is large, so that it is preferable to use some kinds of the compounds having different melting points and/or some kinds of the resin having different softening points in combination in accordance with the use purpose.

In the invention, the viscosity of the rubber composition is defined according to ASTM D5099-93 because the measuring method of ASTM well corresponds to the extrusion workability of rubber as compared with the measuring method of generally used Mooney viscosity. In the rubber composition according to the invention, the viscosity is not more than 2 kPa·s as measured at a shearing rate of 750 s⁻¹ and a temperature of 100°C according to ASTM D5099-93. When the viscosity exceeds 2 kPa·s, it is difficult to ensure sufficient extrusion workability.

Also, in the rubber composition according to the invention, a tensile stress at 100% elongation is not less than 5 MPa, and an elongation at break is not less than 200%, preferably not less than 300% as rubber properties after the vulcanization. The coating rubber constituting the belt layer is required to have high modulus of elasticity and high fracture properties as properties after the vulcanization. They can be attained when the tensile stress and the elongation at break are within the above ranges, and hence the durability as a tire is sufficiently obtained.

The rubber composition according to the invention preferably further contains 0.5-2.0 parts by mass of N,N'-dicyclohexyl-2-benzothiazolyl sulfenamide based on 100 parts by mass of the rubber component from a viewpoint of improving the adhesion property between steel cord and coating rubber and rubber properties. When the amount of N,N'-dicyclohexyl-2-benzothiazolyl sulfenamide is less than 0.5 part by mass, the effect by the inclusion of this substance is small, while when it exceeds 2.0 parts by mass, the fracture properties lower.

Also, the rubber composition preferably further contains 0.02-0.4 part by mass of a cobalt compound as a total content of cobalt element based on 100 parts by weight of the rubber component from a viewpoint of improving the adhesion property between steel cord and coating rubber. When the cobalt content is less than 0.02 part by mass, the effect by the inclusion of the cobalt compound is small, while when it exceeds 0.4 part by mass, the deterioration of rubber becomes larger.

The rubber composition preferably contains 4.0-8.0 parts by mass of sulfur based on 100 parts by mass of the rubber component as a vulcanizing agent from a viewpoint of ensuring stabilization of the adhesion between steel cord and coating rubber and high modulus of elasticity. When the sulfur content is less than 4.0 parts by mass, the stabilization of the adhesion is insufficient, while when it exceeds 8.0 parts by mass, the resistance to heat deterioration is poor.

Furthermore, the rubber composition may be properly compounded with additives well-known in the art such as, for example, an inorganic filler such as carbon black, silica or the like, an antioxidant, zinc white, stearic acid and the like. Moreover, usual air or air having a changed oxygen partial pressure or an inert gas such as nitrogen or the like is mentioned as a gas filled in the inside of the tire.

In the method of producing the tire according to the invention as mentioned above, the belt layer is formed by so-called core shaping, and the rubber composition having a good extrusion workability is applied in the coating rubber therefor, whereby it can be realized to simultaneously establish the extrusion workability and the tire durability, which could not be realized in the conventional core shaping. In the tire produced by the method of the invention, the affixing accuracy of the belt layer is high because the belt layer is formed by the core shaping, and the modulus of elasticity of the coating rubber in the belt layer is high, so that the tire durability is high.

The invention will be described in detail with reference to the following examples, but it is not limited to these examples.

A rubber composition is prepared according to a compounding recipe of Table 1 and used as a coating rubber for a steel cord constituting a belt layer to form a belt layer by core shaping to thereby produce a tire for a passenger car having a tire size of 175/70R14. The following test are carried out with respect to the resulting rubber composition and the passenger car tire.

### (1) Viscosity

The viscosity is measured through a capillary rheometer according to a piston type measuring method of ASTM D5099-93. Moreover, a shearing rate is 750 s⁻¹ and a measuring temperature is 100°C.

### (2) Extrusion workability

The rubber composition having a compounding recipe of Table 1 is extruded at a target extruding rate, in which a case of causing scorching is NG and a case of shaping without scorching is OK.

### (3) Tensile stress at 100% elongation

The tensile stress at 100% elongation is measured by using a dumbbell test specimen of JIS No. 3 according to JIS K6251-1993.

### (4) Modulus of elasticity

The value of the tensile stress at 100% elongation measured above is represented by an index on the basis that Comparative Example 1 is 100, in which the larger the index value, the higher and the better the modulus of elasticity.

### (5) Elongation at break

The elongation at break is measured by using a dumbbell test specimen of JIS No. 3 according to JIS K6251-1993.

### (6) Heat build-up

A loss tangent (loss factor) tan δ at 50°C is measured and represented by an index on the basis that Comparative Example 1 is 100. The larger the index value, the lower tan δ and the smaller and the better the heat build-up.

### (7) Tire durability

After the tire is actually run over 70,000 km, a half circumference of the tire is cut and exposed to measure a length of crack in the belt layer, which is represented by an index on the basis that Comparative Example 1 is 100. The larger the index value, the shorter the crack and the better the durability. Moreover, as the crack grows, the belt layer may be separated to cause problems.

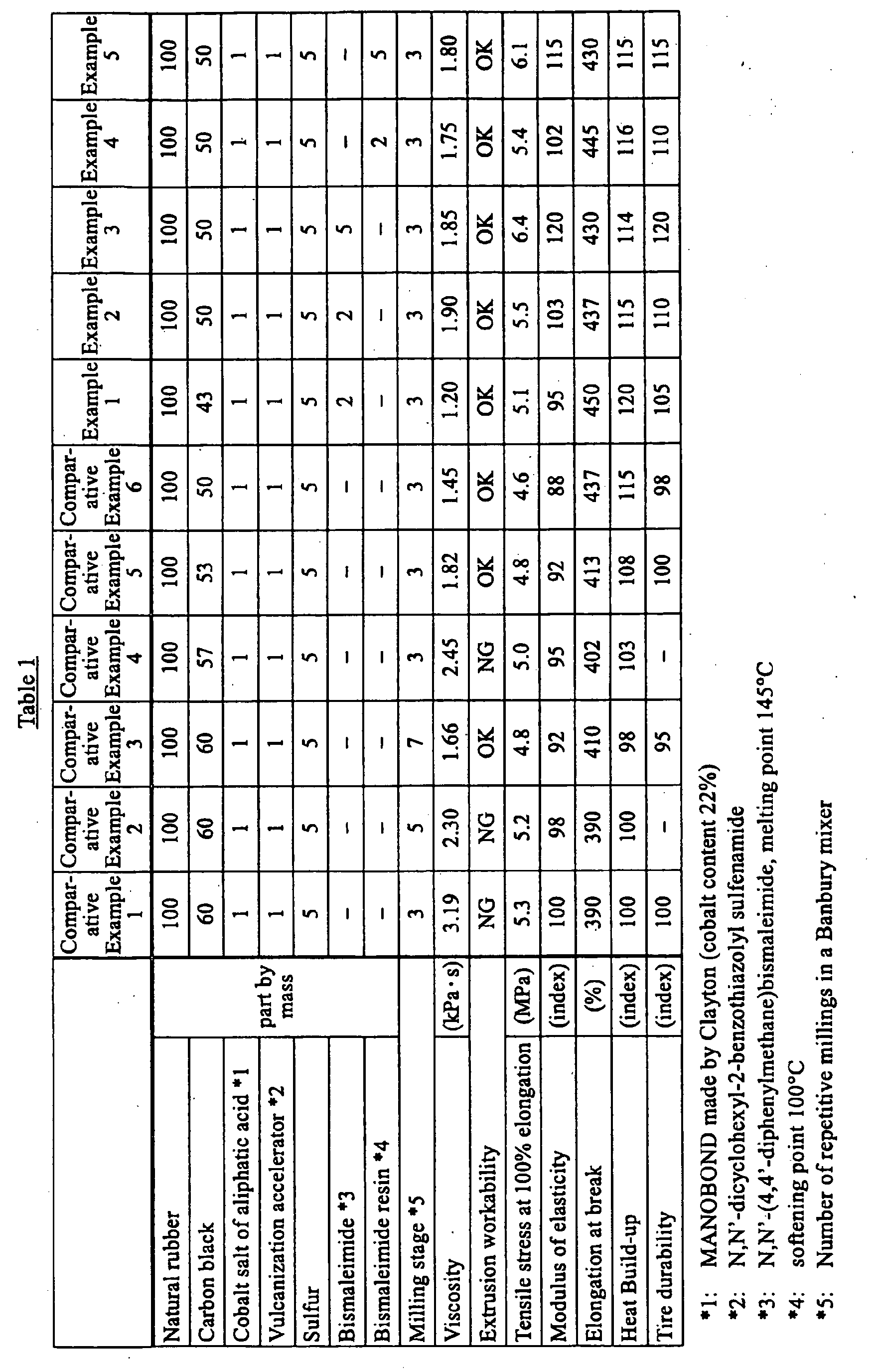

As seen from Comparative Examples 1, 2 and 3, when the milling is repeated in the Banbury mixer, the viscosity lowers and the extrusion workability is improved, but the modulus of elasticity and durability lower.

As seen from Comparative Examples 4, 5 and 6, when the amount of carbon black is decreased as a filler, the viscosity lowers and the extrusion workability is improved, but the modulus of elasticity lowers and the durability is equal to or less than that of Comparative Example 1.

On the other hand, in the tires of Examples 1-5 according to the invention, the resin is added and the amount of carbon black is decreased, so that the target viscosity is attained and the extrusion workability is improved ,and further the tire durability can be more improved as compared with Comparative Example 1. Moreover, in the tire of Example 1, the modulus of elasticity somewhat lowers, but the heat build-up is considerably low and good, so that it is guessed that the tire durability is improved.

According to the production method of the invention, by using the rubber composition compounded with the specified amount of the compound and/or the resin having the specified melting point or softening point the extrusion workability at the uncured state of the rubber composition is improved, so that a fast extruding rate can be adopted without scorching, and also the tire durability can be improved.

## Claims

1. A method of producing a pneumatic tire comprising a belt comprised of at least two belt layers each constituted with steel cords and a coating rubber covering the cord between a tread and a radial carcass by spirally winding a band-shaped uncured rubber composition extruded through an extruder on a rotating support to form a rubber member having a given sectional shape, wherein the formation of the belt layer is carried out by ① successively laminating the coating rubber and the steel cords, or by 20 affixing a small-width band-shaped body of single or plural steel cords previously covered with the coating rubber, or by ③ forming a small-width band-shaped body by covering a single or plural steel cords with the coating rubber during the shaping and affixing it, and a rubber composition constituting the coating rubber is formed by compounding at least one of (a) a rubber component with a compound having a melting point of 120-220°C and (b) a resin having a softening point prior to curing of 90-150°C, so that the rubber composition has a viscosity of not more than 2 kPa·s as measured at a shearing rate of 750 s⁻¹ and a temperature of 100°C according to ASTM D5099-93, and a tensile stress at 100% elongation of not less than 5 MPa and an elongation at break of not less than 200% as rubber properties after the vulcanization, and a total compounding amount of the compound and the resin is 0.5-25 parts by mass based on 100 parts by mass of the rubber component.

2. A method as claimed in claim 1, wherein the resin is a thermosetting resin.

3. A method as claimed in claim 2, wherein the resin is at least one kind of bismaleimide-based resin.

4. A method as claimed in claim 1, wherein the compound is at least one bismaleimide.

5. A method as claimed in claim 1, wherein the rubber composition further contains 0.5-2.0 parts by mass of N,N'-dicyclohexyl-2-benzothiazolyl sulfenamide based on 100 parts by mass of the rubber component.

6. A method as claimed in claim 1, wherein the rubber composition further contains 0.02-0.4 part by mass of a cobalt compound as a total content of a cobalt element based on 100 parts by mass of the rubber component.

7. A method as claimed in claim 1, wherein the rubber composition contains 4.0-8.0 parts by mass of sulfur as a vulcanizing agent based on 100 parts by mass of the rubber component.

## Patentansprüche

1. Verfahren zur Herstellung eines Luftreifens mit einem Gürtel, der aus mindestens zwei jeweils mit Stahlkorden gebildeten Gürtellagen und einer Kautschuklage besteht, die den Kord zwischen einer Lauffläche und einer Radialkarkasse bedeckt, durch spiralförmiges Wickeln einer bandförmigen unvulkanisierten Kautschukzusammensetzung, die durch eine Strangpresse auf einem rotierenden Träger extrudiert wird, um ein Kautschukelement mit einer gegebenen Querschnittsform zu formen, wobei die Ausbildung der Gürtellage durch (1) aufeinanderfolgendes Laminieren des Beschichtungskautschuks und der Stahllcorde, oder durch (2) Befestigen eines bandförmigen Köpers von geringer Breite aus einem oder mehreren Stahlkorden, die zuvor mit dem Beschichtungskautschuk bedeckt wurden, oder durch (3) Ausbilden eines bandförmigen Körpers von geringer Breite durch Bedecken eines oder mehrerer Stahlkorde mit dem Beschichtungskautschuk während der Formgebung und Befestigen des Körpers ausgeführt wird und eine den Beschichtungskautschuk bildende Kautschukzusammensetzung durch Compoundieren mindestens eines der folgenden Bestandteile gebildet wird: (a) einer Kautschukkomponente mit einer Verbindung, die einen Schmelzpunkt von 120-220°C aufweist, und (b) eines Harzes mit einem Erweichungspunkt vor dem Vulkanisieren von 90-150°C, so daß die Kautschukzusammensetzung eine Viskosität von nicht mehr als 2 kPa·s, gemessen bei einer Scherrate von 750 S⁻¹ und einer Temperatur von 100°C gemäß ASTM D5099-93, und eine Zugspannung bei 100% Dehnung von nicht weniger als 5MPa sowie eine Bruchdehnung von nicht weniger als 200% als Gummieigenschaften nach der Vulkanisation aufweist und ein Gesamtmischungsanteil der Verbindung und des Harzes 0,5-25 Masseteile beträgt, bezogen auf 100 Masseteile der Kautschukkomponente.

2. Verfahren nach Anspruch 1, wobei das Harz ein hitzehärtbares Harz ist.

3. Verfahren nach Anspruch 2, wobei das Harz mindestens eine Art von Harz auf Bismaleimid-Basis ist.

4. Verfahren nach Anspruch 1, wobei die Verbindung mindestens ein Bismaleimid ist.

5. Verfahren nach Anspruch 1, wobei die Kautschukzusammensetzung ferner 0,5-2,0 Masseteile N,N'-Dicyclohexyl-2-benzothiazolsulfenamid enthält, bezogen auf 100 Masseteile der Kautschukkomponente.

6. Verfahren nach Anspruch 1, wobei die Kautschukzusammensetzung ferner 0,02-0,4 Masseteil einer Cobaltverbindung als Gesamtanteil eines Cobaltelements enthält, bezogen auf 100 Masseteile der Kautschukkomponente.

7. Verfahren nach Anspruch 1, wobei die Kautschukzusammensetzung 4,0-8,0 Masseteile Schwefel als Vulkanisiermittel enthält, bezogen auf 100 Masseteile der Kautschukkomponente.

## Revendications

1. Procédé de production d'un bandage pneumatique, comprenant une ceinture composée d'au moins deux nappes de ceinture, comprenant chacune des câblés d'acier et une gomme de revêtement recouvrant le câblé entre une bande de roulement et une carcasse radiale, par enroulement en spirale d'une composition de caoutchouc non vulcanisée extrudée à travers une extrudeuse sur un support rotatif, pour former un élément de caoutchouc ayant une forme de section définie, la formation de la couche de ceinture étant effectuée en (1) stratifiant successivement la gomme de revêtement et les câblés d'acier, ou (2) en fixant un corps en forme de bande à largeur réduite comprenant un seul ou plusieurs câblés d'acier, recouverts auparavant de la gomme de revêtement, ou (3) en formant un corps en forme de bande à largeur réduite en recouvrant un seul ou plusieurs câblés d'acier de la gomme de revêtement pendant le formage et en le fixant, et une composition de caoutchouc constituant la gomme de revêtement étant formée en mélangeant au moins un composant, (a) un composant de caoutchouc avec un composé ayant un point de fusion compris entre 120 et 220°C, ou (b) une résine, ayant un point de ramollissement avant le durcissement compris entre 90 et 150°C, de sorte que la composition de caoutchouc a une viscosité non supérieure à 2 kPa, mesurée en présence d'un taux de cisaillement de 750s⁻¹ et d'une température de 100°, selon la norme ASTM D5099-93, une contrainte de traction en présence d'un allongement à 100% non inférieure à 5 MPa, et un allongement à la rupture non inférieur à 2000%, constituant les propriétés du caoutchouc après la vulcanisation, une quantité de mélange totale du composé et de la résine représentant 0,5 à 25 parties en poids, sur la base de 100 parties en poids du composant de caoutchouc.

2. Procédé selon la revendication 1, dans lequel la résine est une résine thermodurcissable.

3. Procédé selon la revendication 2, dans lequel la résine est au moins une résine du type à base de bismaléimide.

4. Procédé selon la revendication 1, dans lequel le composé est au moins un bismaléimide.

5. Procédé selon la revendication 1, dans lequel la composition de caoutchouc contient en outre 0,5 à 2,0 parties en poids de N, N'-dicyclohexyl-2-benzothiazol sulfanémide sur la base de 100 parties en poids du composant de caoutchouc.

6. Procédé selon la revendication 1, dans lequel la composition de caoutchouc contient en outre 0,02 à 0,4 parties en poids d'un composé de cobalt, représentant une teneur totale d'un élément de cobalt, sur la base de 100 parties en poids du composant de caoutchouc.

7. Procédé selon la revendication 1, dans lequel la composition de caoutchouc contient 4,0 à 8,0 parties en poids de soufre, comme agent de vulcanisation, sur la base de 100 parties en poids du composant de caoutchouc.
